# EUROPEAN PATENT SPECIFICATION

(11) **EP 2 406 015 B1**
(45) Date of publication and mention of the grant of the patent: **08.07.2020**
(21) Application number: 10751411.9
(22) Date of filing: 11.03.2010
(51) Int. Cl.: B05B 7/14, B05B 13/00, B05B 15/00, B05D 1/12, B28C 5/02, C04B 35/66, C04B 35/63

(54) **IMPROVED PROCESS FOR GUNITING REFRACTORY MIXES USING CONVENTIONAL DRY GUNNING EQUIPMENT**
VERBESSERTES VERFAHREN ZUR SPRITZBETONIERUNG FEUERFESTER GEMISCHE MITHILFE EINER KONVENTIONELLEN TROCKENBESCHUSSANORDNUNG
PROCESSUS AMÉLIORÉ POUR LA PROJECTION AU PISTOLET DE MÉLANGES RÉFRACTAIRES À L'AIDE D'UN ÉQUIPEMENT CONVENTIONNEL DE PROJECTION À SEC

(30) Priority: 11.03.2009 US 159183 P
(43) Date of publication of application: 18.01.2012
(73) Proprietor: Reno Refractories, Inc., Morris, AL 35116 (US)
(72) Inventor: BENSON, James, Warrier AL 35180 (US); PATTILLO, Robert, Birmingham AL 35242 (US); ZINN, Heidi, Mcarthur OH 45651 (US)
(74) Representative: Plasseraud IP
(86) International application number: PCT/US2010/026972
(87) International publication number: WO 2010/105049

(56) References cited:
- EP-A1- 0 506 421
- EP-A2- 0 307 066
- FR-A1- 2 407 058
- JP-U- S52 102 914
- US-A- 2 533 118
- US-A- 4 239 397
- US-A- 4 412 863
- US-A- 4 623 393
- US-A- 4 673 594
- US-A- 4 695 167
- US-A- 5 961 712
- US-A- 6 004 626
- US-A1- 2004 144 859
- US-A1- 2008 314 084

## Description

This invention claims benefit to U.S. Provisional Patent Application Serial No. 60/159,183, filed March 11, 2009.

### Field of the Invention

The invention relates to a process for guniting refractory mixes using dry gunning equipment using a modified binder system.

### Background of the Invention

Refractory materials are designed to retain their strength at high temperatures and are thus used, for among other things, as liners in furnaces, incinerators and ovens. The refractory materials may be applied in a number of known ways including by casting, pumping, shotcreting or dry gunning.

Although casting is suitable for creating liners in many applications, it requires significant time and expense in creating and using forms for the casting. Furthermore, it is not always feasible to build forms depending on the shape of the casting and or its application.

Pumping a wet castable through a hose also has problems. Among other things, pumping a wet material through equipment can often to lead to plugged lines. For example, variations in the raw materials and/or conditions at the job site can lead to a marginally pumpable material that can cause plugging and setting of the material in the hoses, thus shutting down the job. Additionally, pumping requires the use of expensive equipment.

While shotcreting, which involves pneumatically projecting mortar or concrete onto a surface at a high velocity, may work, it requires the use of expensive equipment and a large work crew to operate. Shotcreting introduces a setting agent at the nozzle, where it is not evenly distributed throughout the refractory mass, thereby leading to variations in material properties. In order for shotcreting to be used with colloidal silica bonded materials, it is generally necessary to use 9-10% colloidal silica, thereby resulting in 6% to 6.6% water in the finished product. To prevent the castable from slumping on the wall, a water-containing setting agent is injected at the nozzle to cause the mass to harden upon being applied to the surface.

In addition to the problems set forth above, the increased level of water required in the pumping and shotcreting methods in order to achieve a fluid consistency results in a higher porosity product. This results in decreased properties and resistance to slag and metal penetration. Additionally, the high percentage of water also increases the drying time for these methods. **Methods utilizing refractory mixes are also disclosed in** US 4,623,393**,** US 4,695,167**,** FR 2 407 058**,** US 6,004,626**,** US 4,673,594 **and** JP S52 102914 U.

The teaching of US 4,623,393 is directed to a process for applying a low-cement dry refractory mix to a surface using a dry gunnite machine having a nozzle.

Current dry gun methods include the introduction of water into a nozzle. The nozzle being attached to the end of a hose used to transport the dry material in a compressed air stream. However, problems have arisen using this process from, among other things, the introduction of water. In particular, it is important to make sure that the cement is properly hydrated so a large amount of water is necessary to be introduced at the nozzle. The use of a large amount of water weakens the compressive strength of the finished product. Additionally, it is very difficult to wet the fine components of the material in the very short residence time within the nozzle. The poor mixing between the fine powders, coarse aggregates and water in the nozzle results in some portion of the material bouncing off the surface or rebounding. This creates clean up, occupational hazards, and waste as well as increasing the cost of application while decreasing the processes efficiency. Dry gunniting also creates a significant amount of dust that can be hazardous to operators of the machines.

### SUMMARY OF THE INVENTION

The present invention is an improvement over the prior art dry gunniting systems and methods, in one embodiment, in that the design of the dry mix and the application method allow the installation of refractory with properties that surpass regular gunnite mixes and shotcrete products. One aspect of the invention utilizes gunning mixes that do not contain cement. The dry refractory mix also may include a setting agent that is homogeneously blended with the other materials.

In operation, when used with pneumatic systems, dry refractory material material is fed into a hopper of a gunnite machine and is then introduced into an air flow and conveyed by air through one or more hoses to a nozzle. A liquid binder is introduced into the air flow for mixing with the suspended dry refractory material at or before the nozzle. A fitting, such as a water ring with holes, may be used for injecting the binder into the air flow containing the dry refractory material. A pump or other know pressurizing means is used to pressurize the binder and force it flow to the fitting. A needle valve may be used to control the amount of liquid binder introduced into the system. The dry refractory material is discharged through the nozzle for application to the surface with the liquid binder.

It is therefore an object of the present invention to provide a new and improved process for applying refractory mixes.

Another object of the present invention is to provide a new and improved process for applying refractory mixes that limits the amount of water needed.

Yet another object of the present invention is to eliminate the need to use a cement in a dry gunning application.

It is yet another object of the present invention to produce a system for applying refractory mixes that is economical and easy to use.

Still another object of the invention is to provide refractory mixes having increased physical properties.

Other objects, features and advantages of the invention will be apparent from the following detailed disclosure, taken in conjunction with the accompanying sheets of drawings, wherein like reference numerals refer to like parts.

### BRIEF DESCRIPTION OF THE DRAWINGS

FIG. 1 is a front perspective view of one embodiment of a dry gunning machine.
FIG. 2 is a top perspective view of a half section or half height bowl and spacer.
FIG. 3 is a partial perspective view of a dry gunning machine of Fig. 1 showing a half height bowl.
FIG. 4 is a front perspective view of one embodiment of a nozzle showing a nozzle extension.
FIG. 5 is a front elevation view of the nozzle and nozzle extension of Fig. 4.

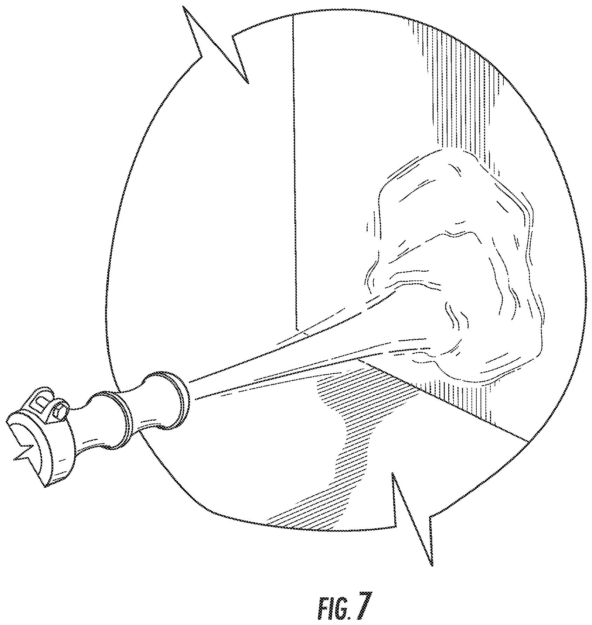

FIGS. 6 and 7 are perspective views illustrating the application of material to a surface through a nozzle.

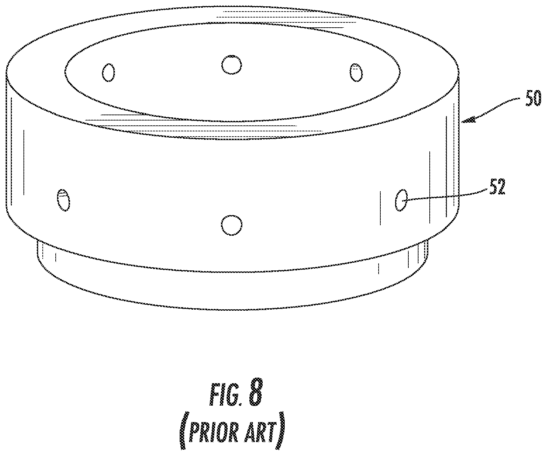

FIG. 8 is a front perspective view of a water ring.

### DETAILED DESCRIPTION OF THE INVENTION

While this invention is susceptible of embodiment in many different forms, there is shown in the drawings and will herein be described in detail several specific embodiments, with the understanding that the present disclosure is to be considered merely an exemplification of the principles of the invention and the application is limited only to the appended claims.

One aspect of the present invention is directed to a line of no-cement gunning mixes that can be applied using conventional guniting equipment such as Allentown and Blastcrete pneumatic guns. The dry mix, which is provided into a storage area for the guniting equipment, is conveyed by air though hoses and the binder is added at the nozzle or application end of the hose. The design of these mixes and the application method allow the installation of refractory with properties that surpass regular gunite mixes and shotcrete products. The binder and the mix design result in installed product with excellent thermal shock resistance, high hot load strength, lower porosity and excellent resistance to chemical attack. Examples of no-cement gunning mixes include, but are not limited to, materials comprising 0-95 percent aluminum oxide, 0-95 percent aluminosilicate compounds, 0-100 percent zircon, 0-95 percent Alumina-Zirconia-Silicate(AZS), 0-100 percent Silica, 0-90 percent silicon carbide, or 0-80 percent chrome oxide with the remaining balance being alumina. The formulations designed for use in this invention are similar to those normally used for application with a Shotcrete or gunnite installation. The preferred modification is that the amount of fine powders in the formulation are reduced by approximately 5% since the binder is added to the material in the nozzle. In a preferred embodiment, the dry refractory mix includes a setting agent that is homogeneously blended with the other materials.

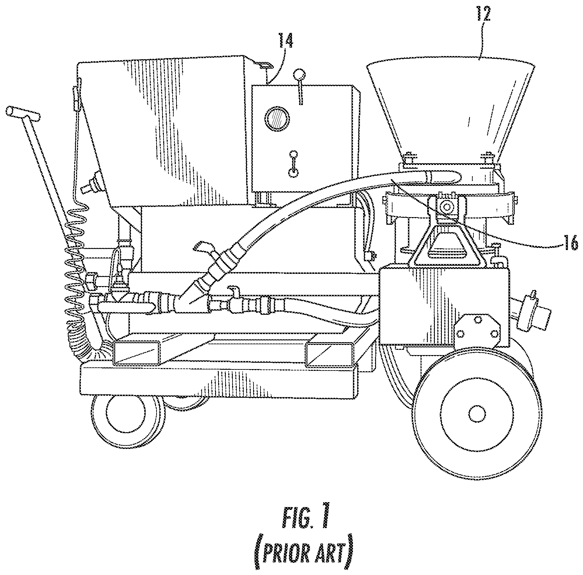

Referring to Figure 1, one embodiment of a known gunite machine 10 to apply the refractory mixes is shown. While a number of gunite machines may be utilized, it is appreciated that good results will occur through use of a pneumatic gunite machine such as an Allentown or Blastcrete gun (as shown in Figure 1). The gunnite machine include a hopper 12 for receiving a refractory material, and a pump 14 for generating an air flow through hose 16. A valve 18 on the connector for the hose 16 can regulate the flow of materials and air through the hose 16. A coupling member 20 at the end of the connector permits a hose 30 to be attached or connected thereto in a known way. An air compressor, capable of maintaining a minimum pressure of 80 psi (551580.8 Pa) at the gun and an air flow of at least 450 cfm (764.6 m3/h) is also recommended. Material can be feed into the hopper 12 in a variety of ways, including but not limited to, by individual small bags, bulk bags with flow control spouts or surge hoppers placed above the hopper.

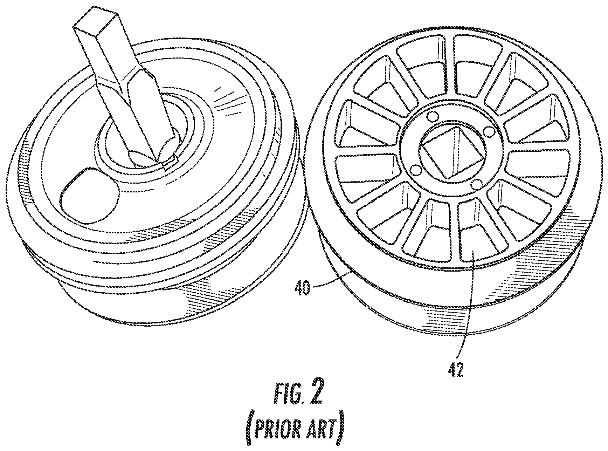

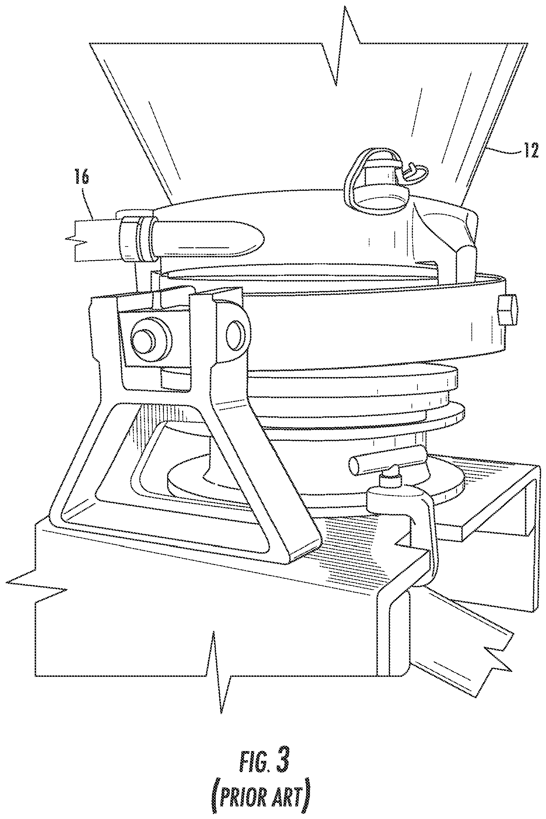

In one embodiment using a pneumatic gunite machine, it is appreciated that the feed rate and mechanism needs to be reduced from what is generally supplied by the gun manufacturer. Normally the gun is set up for high production, high volume gunning of high cement gun mixes. The nature of the refractory gunnite mixes in this invention requires intimate mixing of the binder with the dry powder to achieve superior results. Blastcrete has what is referred to a "half sector bowl". The openings in the feed wheel are the same but the height of the bowl is one half of the high production bowl. As shown in Figures 2 and 3, the half sector bowl 40 defines a plurality of open spaces 42 that allows a more even flow of material into the air stream or air flow and somewhat reduces the amount of material in the hose 16. This allows smoother gunning and complete wetting of the material by the liquid at the nozzle.

The liquid binder provided for the refractory mixes may be supplied in large tote tanks or if desired, in five gallon (18.93 L) pails. The binder is preferably introduced into the dry material at or proximate the nozzle. A diaphragm pump can be use to pump the binder to the "water ring" 50 between the hose 30 and the nozzle 60. It is also appreciated that other known devices and systems for moving liquids under pressure may be utilized including, but not limited to, other types of pumps and pressurized tanks. The "water ring" 50 is a circular tube arrangement with multiple fine holes 52 drilled into the inner surface. In the preferred embodiment, an 8 hole ring is used. The binder is delivered through the binder line 70 using a series of high pressure jets into the passing material at the ring 50. A needle valve 72 may be used to precisely control the amount of liquid binder introduced into the ring 50 through tubing or connector 74. Too much binder will result in slumping and too little will cause excessive dusting and rebound. It is appreciated that amount of pressure needed will vary depending on the needed flow rate and addition rate, as well as the type of ring or fitting used. In one embodiment, the binder pump should supply the binder to the high pressure jets with a minimum of 100 (689476 Pa) psi to increase the wetting efficiency, reduces the amount of binder used, reduce dusting and rebound and maximize the physical properties of the material. In another embodiment, the binder may be discharged under a minimum of 20 psi (137895.2 Pa) differential pressure to the material transport hose. In all cases, the binder should be delivered at a pressure sufficient for injection into the air stream transporting the suspended dry refractory aggregates.

While a variety of liquid binders may be used, examples of liquid binders includes, but are not limited to, sodium silicate, potassium silicate, a resin (nouvalac, phenolic, aqueous and non aqueous polymers) or a binder that includes colloidal silica or other dispersed colloidal particles. The binder does not necessarily need to contain water, only that it is a liquid that can be pumped and injected into the air stream containing the dry refractory particles. or a binder that includes a colloidal silica or dispersed colloidal particles. One example of a binder includes a colloidal silica solution composed of colloidal silica particles dispersed in water at a 10-50% concentration level. In another embodiment, a portion of the fine particles of the refractory is predispersed in the colloidal silica liquid.

In another example, the process of the present invention injects about 4% to 30% colloidal silica into the dry refractory material. Where 9.0 to 11.0% colloidal silica is injected into the dry material, this equals an addition of 5.4-6.6% water from the binder solution. This amount of water addition represents a significant reduction of water in the finished materials from prior gunnite processes. Less water results in a lower porosity product, which provides improved properties and resistance to slag and metal penetration. It is appreciated that the amount of colloidal silica used can vary depending upon the particular dry material used.

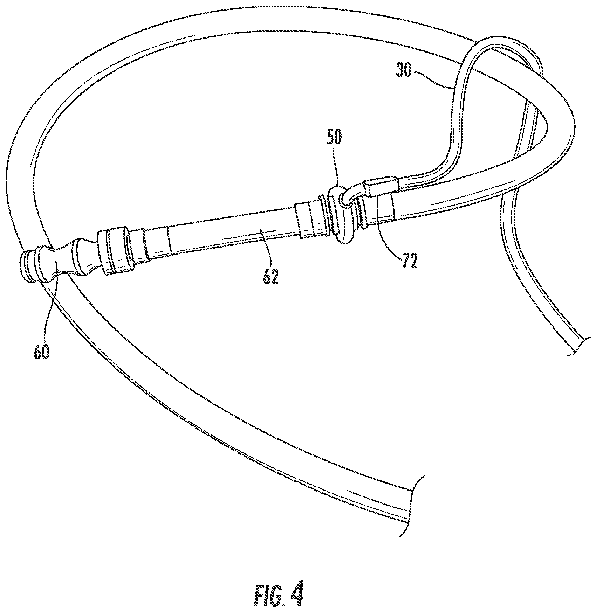

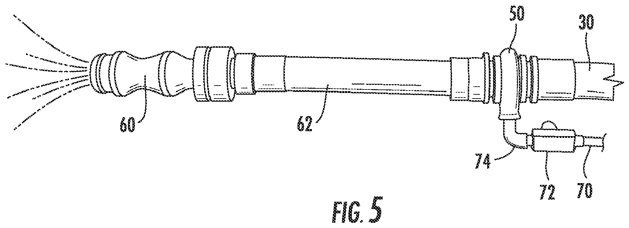

A nozzle extension 62 and double bubble nozzle 60 may be used to allow improved mixing of the liquid and the dry material before exiting the nozzle 60. One example is shown in Figures 4 and 5. In one embodiment, this extension 62 can be 12 to 24 inches (60.96 cm) long. For comfort, the needle valve control can be mounted next to the nozzle while the liquid is introduced back 12-24 inches (30.48 - 60.96 cm) from the nozzle.

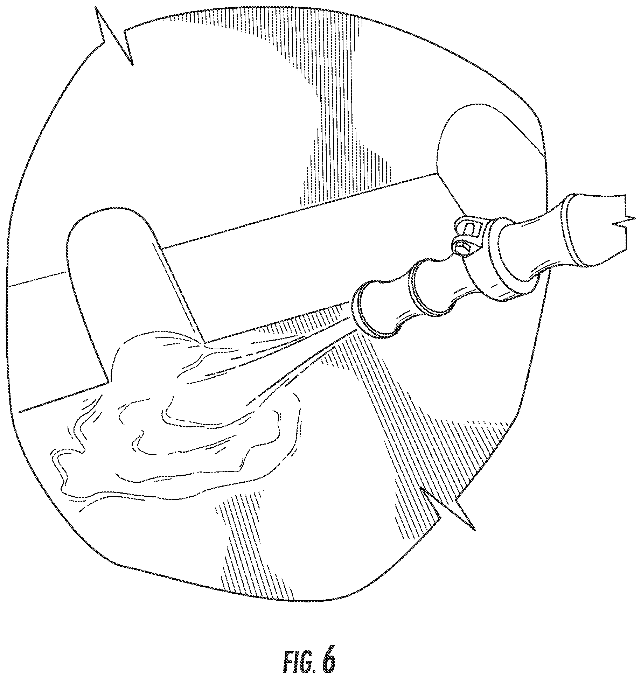

Referring to Figure 6, one option for use with the nozzle extension is to use two double bubble nozzles fitted together in series. The binder and dry material mix very well using this arrangement. Some installers find the double bubble nozzle arrangement easier to use as compared to an extension.

The use of the nozzle extension or double bubble nozzle, an 8 hole water ring and pressurized binder delivery system will provide adequate wetting of the refractory before it exits the nozzle.

It will be understood that modifications and variations may be effected without departing from the scope of the novel concepts of the present invention, but it is understood that this application is limited only by the scope of the appended claims.

## Claims

1. A process for applying dry refractory mixes that do not contain cement to a surface using a dry gunnite machine (10) having a nozzle, comprising the steps of:
providing dry refractory material containing a setting agent into a storage area for the dry gunnite machine (10);;
introducing the dry refractory material into an air flow generated within the dry gunnite machine (10);
introducing a liquid binder into the air flow generated by the dry gunnite machine (10), wherein the liquid binder is mixed with the dry refractory material at or proximate the nozzle (60); and
discharging the dry refractory mix through the nozzle (60) for application to the surface to be coated with the refractory mix.

2. The process of claim 1 wherein the setting agent is homogeneously blended into the dry refractory material.

3. The process of claim 1 wherein the step of introducing a liquid binder includes the step of providing a fitting, such as a water ring (50) with holes (52), for injection of the binder into the air flow containing the dry refractory material.

4. The process of claim 1 wherein the step of introducing a liquid binder includes the step of providing a fitting based on a water ring (50) with continuous grooves machined into the ring, for injection of the binder into the air stream containing the dry refractory material.

5. The process of claim 1 wherein the step of introducing a liquid binder includes the step of injection of the binder into the air flow containing the dry refractory material at a location before the nozzle (60).

6. The process of claim 3 wherein the fitting is a water ring (50) with holes (52) sized for compatibility with the liquid binder used.

7. The process of claim 1 which further comprises a pump that pressurizes the binder.

8. The process of claim 1 which further comprises means to pressurize the binder.

9. The process of claim 3 which further comprises a plurality of high pressure jets operatively associated with the fitting to discharge the liquid binder under pressure.

10. The process of claim 1 wherein the liquid binder is discharged under a minimum of 20 psi (137895.2 Pa)
differential pressure to the material transport hose.

11. The process of claim 3 which further comprises a needle valve (72) to control the amount of liquid binder.

12. The process of claim 1 which further comprises a nozzle extension (62).

13. The process of claim 1 wherein the nozzle (60) is a double bubble nozzle.

14. The process of claim 1 wherein the liquid binder includes colloidal silica, is sodium silicate, potassium silicate, a nouvalac resin, a phenolic resin, a phosphate solution, an aqueous polymer, a non aqueous polymer, or is composed of dispersed colloidal particles.

15. The process of claim 14 wherein the process injected about 4.0 to 30.0% colloidal silica into the dry refractory material.

## Patentansprüche

1. Verfahren zum Aufbringen von trocknen feuerfesten Gemischen, welche keinen Zement enthalten, auf eine Fläche unter Verwendung einer Trocken-Spritzmaschine (10), welche eine Düse aufweist, umfassend die Schritte:
Bereitstellen von trockenem feuerfesten Material, welches ein Setz-Mittel enthält, in einen Speicherbereich für die Trocken-Spritzmaschine (10);
Einführen des trockenen feuerfesten Materials in einen Luftstrom,
welcher innerhalb der Trocken-Spritzmaschine (10) erzeugt wird;
Einführen eines flüssigen Bindemittels in den Luftstrom, welcher durch die Trocken-Spritzmaschine (10) erzeugt wird, wobei das flüssige Bindemittel mit dem trockenen feuerfesten Material an oder nahe zu der Düse (60) gemischt wird; und
Abgeben des trockenen feuerfesten Gemisches durch die Düse (60) zum Auftragen auf die Fläche, welche mit dem feuerfesten Gemisch zu beschichten ist.

2. Verfahren nach Anspruch 1, wobei das Setz-Mittel homogen in das trockene feuerfeste Material gemischt ist.

3. Verfahren nach Anspruch 1, wobei der Schritt des Einführens eines flüssigen Bindemittels den Schritt eines Bereitstellens eines Fittings, beispielsweise eines Wasser-Rings (50) mit Löchern (52), zum Injizieren des Bindemittels in den Luftstrom umfasst, welcher das trockene feuerfeste Material enthält.

4. Verfahren nach Anspruch 1, wobei der Schritt des Einführens eines flüssigen Bindemittels den Schritt eines Bereitstellens eines Fittings auf Grundlage eines Wasser-Rings (50) mit kontinuierlichen Nuten umfasst, welche in den Ring eingearbeitet sind, um das Bindemittel in den Luftstrom zu injizieren, welcher das trockene feuerfeste Material enthält.

5. Verfahren nach Anspruch 1, wobei der Schritt des Einführens eines flüssigen Bindemittels den Schritt eines Injizierens des Bindemittels in den Luftstrom, welcher das trockene feuerfeste Material enthält, an einer Stelle vor der Düse (60) umfasst.

6. Verfahren nach Anspruch 3, wobei das Fitting ein Wasser-Ring (50) mit Löchern (52) ist, welche für eine Kompatibilität mit dem verwendeten flüssigen Bindemittel bemessen sind.

7. Verfahren nach Anspruch 1, welches ferner eine Pumpe umfasst, welche das Bindemittel unter Druck versetzt.

8. Verfahren nach Anspruch 1, welches ferner Mittel umfasst, um das Bindemittel unter Druck zu versetzen.

9. Verfahren nach Anspruch 3, welches ferner eine Mehrzahl von Hochdruck-Düsen umfasst, welche betriebsmäßig dem Fitting zugeordnet sind, um das flüssige Bindemittel unter Druck abzugeben.

10. Verfahren nach Anspruch 1, wobei das flüssige Bindemittel unter einem Minimum von 20 PSI (137895,2 Pa) Differenzialdruck zu dem MaterialTransport-Schlauch abgegeben wird.

11. Verfahren nach Anspruch 3, welches ferner ein Nadel-Ventil (72) umfasst, um die Menge an flüssigem Bindemittel zu steuern.

12. Verfahren nach Anspruch 1, welches ferner eine Düsen-Erweiterung (62) umfasst.

13. Verfahren nach Anspruch 1, wobei die Düse (60) eine Double-Bubble-Düse ist.

14. Verfahren nach Anspruch 1, wobei das flüssige Bindemittel kolloidales Silizium umfasst, Natrium-Silikat, Kalium-Silikat, ein Nouvalac-Harz, ein Phenolharz, eine Phosphat-Lösung, ein wässriges Polymer, ein nichtwässriges Polymer ist oder aus gelösten kolloidalen Partikeln zusammengesetzt ist.

15. Verfahren nach Anspruch 14, wobei das Verfahren etwa 4,0 bis 30,0% kolloidales Silizium in das trockene feuerfeste Material injiziert.

## Revendications

1. Procédé d'application de mélanges réfractaires secs qui ne contiennent pas de ciment sur une surface, en utilisant une machine à béton gunité sec (10) ayant une buse, comprenant les étapes :
de fourniture d'un matériau réfractaire sec contenant un agent de prise dans une zone de stockage pour la machine à béton gunité sec (10) ;
d'introduction du matériau réfractaire sec dans un flux d'air généré à l'intérieur de la machine à béton gunité sec (10) ;
d'introduction d'un liant liquide dans le flux d'air généré par la machine à béton gunité sec (10), dans lequel le liant liquide est mélangé avec le matériau réfractaire sec au niveau ou à proximité de la buse (60) ; et
de déchargement du mélange réfractaire sec par la buse (60) pour application sur la surface à revêtir avec le mélange réfractaire.

2. Procédé selon la revendication 1, dans lequel l'agent de prise est mêlé de manière homogène au matériau réfractaire sec.

3. Procédé selon la revendication 1, dans lequel l'étape d'introduction d'un liant liquide comporte l'étape de fourniture d'un accessoire, tel qu'une bague à eau (50) avec des trous (52), pour l'injection du liant dans le flux d'air contenant le matériau réfractaire sec.

4. Procédé selon la revendication 1, dans lequel l'étape d'introduction d'un liant liquide comporte l'étape de fourniture d'un accessoire sur la base d'une bague à eau (50) avec des rainures continues usinées dans la bague, pour l'injection du liant dans le flux d'air contenant le matériau réfractaire sec.

5. Procédé selon la revendication 1, dans lequel l'étape d'introduction d'un liant liquide comporte l'étape d'injection du liant dans le flux d'air contenant le matériau réfractaire sec à un emplacement avant la buse (60).

6. Procédé selon la revendication 3, dans lequel l'accessoire est une bague à eau (50) avec des trous (52) dimensionnés pour être compatibles avec le liant liquide utilisé.

7. Procédé selon la revendication 1, qui comprend en outre une pompe qui met le liant sous pression.

8. Procédé selon la revendication 1, qui comprend en outre des moyens pour mettre le liant sous pression.

9. Procédé selon la revendication 3, qui comprend en outre une pluralité de jets à haute pression, associés en fonctionnement à l'accessoire, pour décharger le liant liquide sous pression.

10. Procédé selon la revendication 1, dans lequel le liant liquide est déchargé sous une pression différentielle minimale de 20 psi (137 895,2 Pa) dans le tuyau de transport de matériau.

11. Procédé selon la revendication 3, qui comprend en outre une vanne à pointeau (72) pour réguler la quantité de liant liquide.

12. Procédé selon la revendication 1, qui comprend en outre une extension de buse (62).

13. Procédé selon la revendication 1, dans lequel la buse (60) est une buse à double bulle.

14. Procédé selon la revendication 1, dans lequel le liant liquide comporte de la silice colloïdale, est du silicate de sodium, du silicate de potassium, une résine nouvalac, une résine phénolique, une solution de phosphate, un polymère aqueux, un polymère non aqueux, ou est composé de particules colloïdales dispersées.

15. Procédé selon la revendication 14, dans lequel le procédé a injecté environ 4,0 à 30,0 % de silice colloïdale dans le matériau réfractaire sec.
